# EUROPEAN PATENT SPECIFICATION

(11) **EP 4 605 629 B1**
(45) Date of publication and mention of the grant of the patent: **09.12.2026**
(21) Application number: 23805466.2
(22) Date of filing: 20.10.2023
(51) Int. Cl.: E21B 33/038, E21B 43/01, F16L 1/16, H02G 1/10

(54) **CONNECTIONS TO SUBSEA ELECTRICAL EQUIPMENT**
VERBINDUNGEN ZUR ELEKTRISCHEN UNTERWASSERAUSRÜSTUNG
LES CONNEXIONS À L'ÉQUIPEMENT ÉLECTRIQUE SOUS-MARIN

(30) Priority: 21.10.2022 GB 202215640
(43) Date of publication of application: 27.08.2025
(73) Proprietor: Subsea 7 Norway AS, 4033 Stavanger (NO)
(72) Inventor: STANGELAND, Øivind, 4307 Sandnes (NO); MANACH, Julien, Milltimber, Aberdeen AB13 0DS (GB)
(74) Representative: Keltie LLP
(86) International application number: PCT/EP2023/079384
(87) International publication number: WO 2024/084093

(56) References cited:
- WO-A1-2015/093978
- FR-A1- 2 429 955
- US-A1- 2015 167 268

## Description

This invention relates to the challenges of connecting elongate flexible conductors or cables to subsea electrical equipment. Examples of such equipment include subsea transformers, pumps, compressors, variable-speed drives and switchgear, including any supporting or surrounding frames or structures. Subsea cables are used to convey electrical power to or from such equipment and may also be used for other purposes, for example to convey data signals.

Some subsea cables are known in the art as umbilicals. Umbilicals typically comprise two or more conductors or other elongate elements such as fibre optics or fluid conduits, in addition to protective and reinforcing elements. Some subsea cables or smaller umbilicals are known in the art as flying leads. For simplicity, references in this specification to cables will encompass umbilicals and other flexible conductors such as flying leads.

For connection to a preinstalled subsea structure, a cable may comprise a termination head or termination assembly including a connection hub to be coupled to a complementary destination hub of the subsea structure. Only one direction of connection is possible depending on the common axial orientation of the hubs, for example a horizontal or vertical direction.

Sometimes, an articulated lifting yoke is mounted on a cable termination as exemplified by US 9206652 and WO 2019/179986. The yoke is independent of and additional to the cable and is dedicated to installation. Consequently, the yoke constitutes a bulky piece of equipment that is, wastefully, useless after installation.

Lifting yoke systems like those disclosed in US 9206652 and WO 2019/179986 are not practical where the connection hub of a cable must itself be tilted relative to, or into axial alignment with, the destination hub. To the contrary, a lifting yoke is designed to compensate for tilting so that the connection hub will remain in a particular desired orientation, such as on a horizontal axis. It therefore remains a challenge to tilt a connection hub into a different orientation, such as onto a non-horizontal axis, while lifting the head. Indeed, heavy bend stiffeners are typically mounted on the cable to mitigate potential bending moments if this occurs.

WO 2018/127552 introduces a mechanical pivot in a termination head for a flying lead cable. A connection hub of the termination head can be moved horizontally for connection to a destination hub while the remainder of the termination head is tilted at an angle to the horizontal due to constraints of lifting. For this purpose, a free section of flexible cable runs around the pivot between the connection hub and the remainder of the termination head, which is tilted. That free section of cable must bend sharply across the pivot, which risks damage to the cable through bending stresses and would be impractical for cables with large diameter or stiff construction and hence a large minimum bend radius.

Prior art like WO 2018/127552 is unsuitable when a termination head is coupled to heavy electrical equipment, such as a subsea transformer, without an intermediate connection. Maintaining horizontality of the electrical equipment and the termination head is the most important constraint.

WO 2015/093978 describes a subsea termination head assembly arranged to be hingedly connected relative to a subsea structure. The hinged connection allows the termination head to pivot about a pivot axis in order to let the subsea cable adopt a natural catenary curvature in the sea during lowering thereof. The cable extends in a pigtail loop from the termination head and into the subsea structure. The hinged connection is bulky and permits downward pivoting of the cable only.

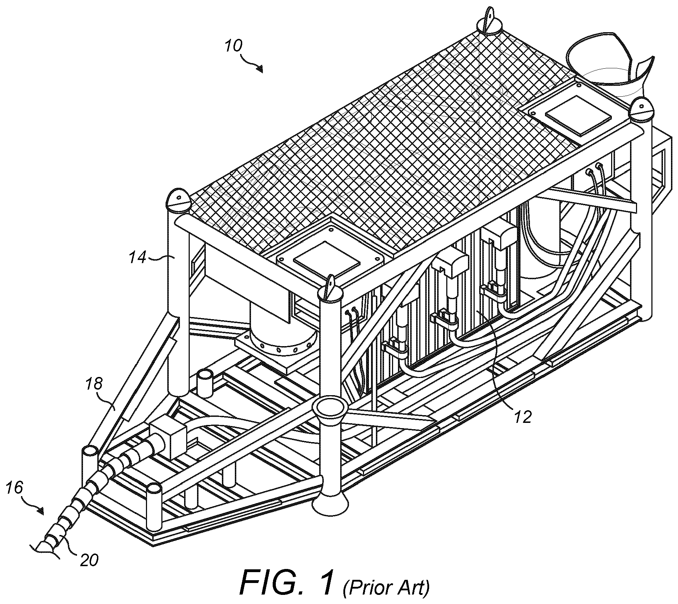

In this respect, the challenges addressed by the invention are best understood by explaining conventional installation techniques used for subsea transformers as an example of subsea electrical equipment. A typical subsea transformer unit 10 is shown in Figure 1, comprising transformer equipment 12 fixed within a supporting and surrounding frame 14. An umbilical cable 16 connects to the unit 10 and is fixed rigidly to an outrigger 18 at one end of the frame 12, either penetrating or extending through the outrigger 18 or being connected to a connector supported by the outrigger 18. The cable 16 is surrounded with a bend restrictor 20 extending outboard of the outrigger 18.

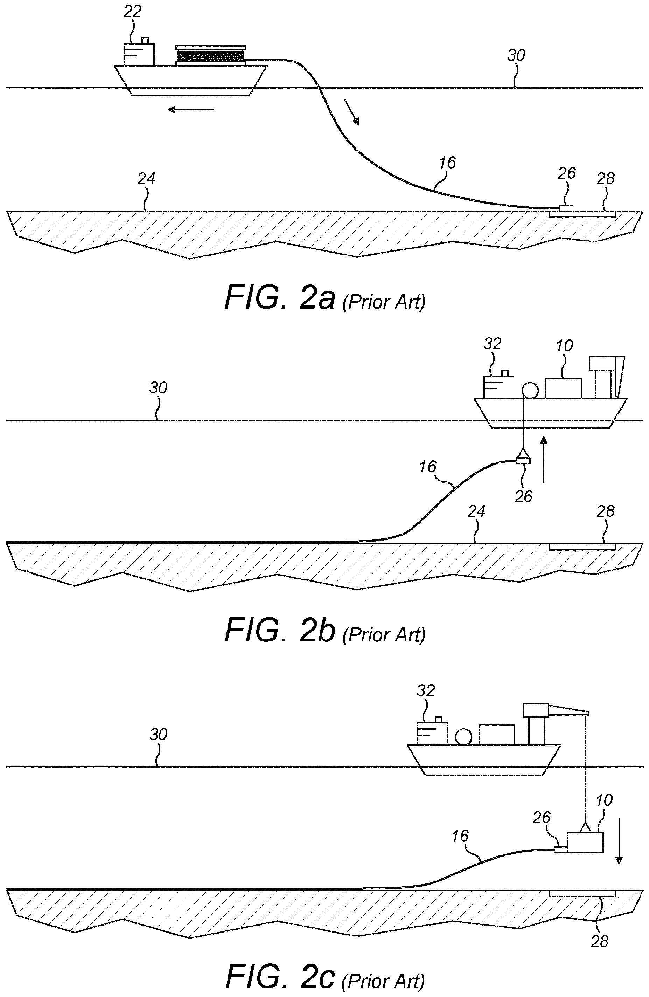

Items of subsea equipment like the unit 10 shown in Figure 1 are large and heavy loads that must be lifted horizontally and remain horizontal while being lowered from a surface vessel to the seabed or while being recovered from the seabed to the surface. A cable 16 connecting to the transformer equipment 12 via the frame 14 must therefore also be kept close to horizontal where it adjoins the frame 14. This complicates and prolongs conventional installation techniques as illustrated in Figures 2a to 4b, greatly increasing cost and requiring a lengthy weather window to be available.

Figures 2a to 2c show a first installation technique that involves two operations to be performed by one or two vessels. Firstly, as shown in Figure 2a, a first vessel 22 lays a power cable 16 on the seabed 24 with a connector 26 at its free end placed on or adjacent to a subsea foundation 28. Subsequently, as shown in Figure 2b, the connector 26 at the free end of the cable 16 is retrieved to the surface 30 by a second vessel 32 that carries the unit 10. Via the connector 26, the cable 16 is connected to the unit 10 aboard the vessel 32. Finally, as shown in Figure 2c, the unit 10 with the cable 16 connected to it is lifted from the vessel 32 and lowered from the surface 30 down to the foundation 28 on the seabed 24.

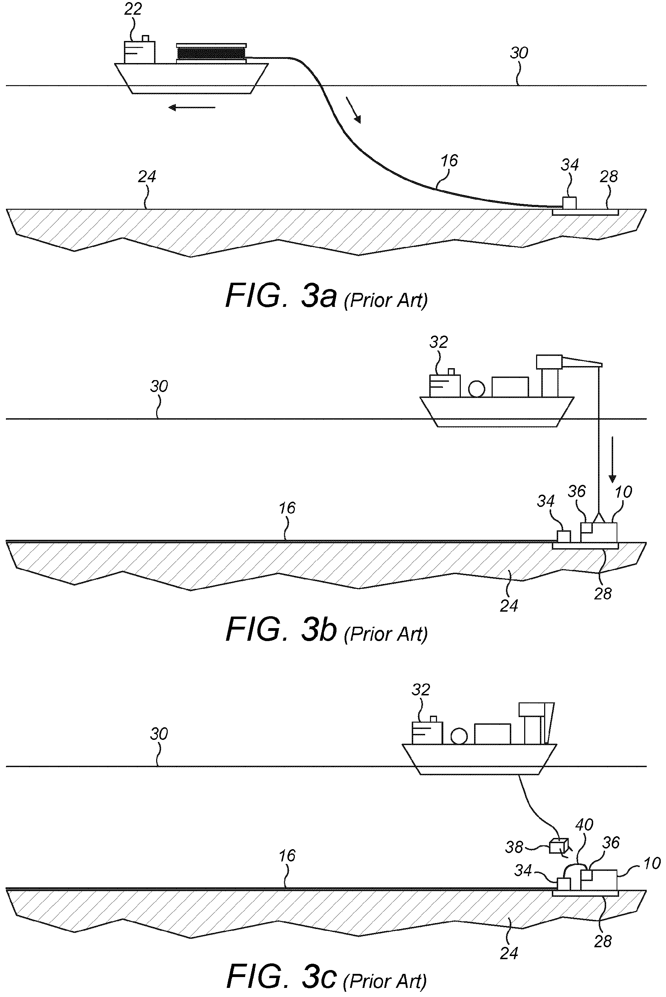

Figures 3a to 3c show a second installation technique that involves three operations to be performed by one, two or even three vessels. Again, a power cable 16 is laid on the seabed 24 by a first vessel 22 as shown in Figure 3a but in this case the cable 16 is fitted with an umbilical termination head (UTH) 34 placed on a foundation 28. Next, as shown in Figure 3b, the unit 10 is lifted from a second vessel 32 and lowered down to the foundation 28 beside the UTH 34. In this case, the unit 10 includes an umbilical termination assembly (UTA) 36. Finally, as shown in Figure 3c, an ROV 38 uses flying leads 40 to connect the UTH 34 of the cable 16 to the UTA 36 of the unit 10.

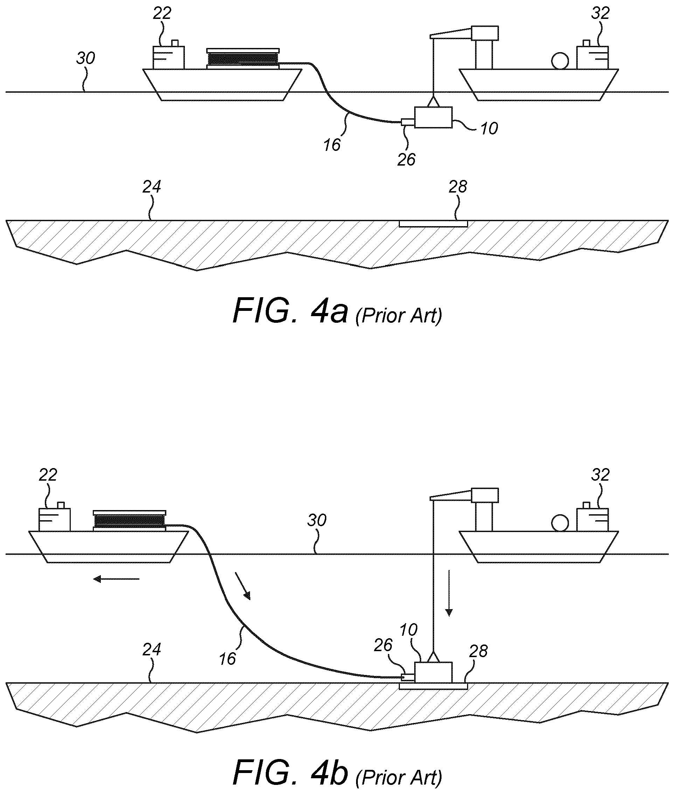

Figures 4a and 4b shows a third installation technique in which one operation is performed simultaneously by two vessels 22, 32. Here, a unit 10 with the cable 16 already connected to it above the surface 30 is shown in Figure 4a being lowered from a second vessel 32 down to a foundation 28 on the seabed 24. Meanwhile, or subsequently, a first vessel 22 lays the cable 16 away from the unit 10 as shown in Figure 4b.

Other documents considered to be of background relevance are EP 3444428; WO 2020/136378; US 2015/167268; FR 2429955; US 3922870; US 2015/176340; EP 2511996; US 2016/281453; and EP 3000716.

Against this background, the invention provides a pivoting cable connection for a subsea equipment unit. The connection comprises: a cable guide supported by the unit and extending along and around a pivot axis that is preferably substantially horizontal; and a cable extending on a cable path through the connection. The cable comprises: an intermediate section at least partially within the cable guide, extending along or beside the pivot axis; and an outboard section, pivotable about the pivot axis, extending away from the pivot axis in a direction transverse to the pivot axis.

The cable guide may form part of a yoke that is pivotable about the pivot axis and that supports the outboard section of the cable at a location offset laterally from the pivot axis. The cable guide is preferably tubular and could be a gutter or a groove, for example on the yoke.

An anchor formation may fix the outboard section of the cable relative to the cable guide. The outboard section of the cable may be supported by at least one arm cantilevered from the cable guide.

The outboard section of the cable may curve away from the pivot axis contained within a portion of the cable guide that correspondingly curves away from the pivot axis. More generally, the outboard section of the cable may curve away from the pivot axis onto an exit axis that is substantially orthogonal to the pivot axis. The outboard section of the cable may, for example, be aligned with the subsea equipment unit. In either case, the outboard section of the cable suitably curves away from the pivot axis in a plane that contains the pivot axis.

The intermediate section of the cable may be disposed between the outboard section of the cable and an inboard section of the cable that extends transversely relative to the pivot axis away from the pivot axis and toward equipment of the unit. The inboard section of the cable may be in substantially fixed relation to the unit.

The inboard section of the cable may be received in a duct that communicates with the cable guide. For example, the duct and the inboard section of the cable may together curve away from the pivot axis.

A swivel acting between the duct and the cable guide suitably permits pivotal movement of the cable guide relative to the duct about the pivot axis. Conveniently, the swivel may surround an aperture in a support, such as an upright flange, that joins the connection to the subsea equipment unit. In that case, the duct suitably communicates with the cable guide through the aperture.

Elegantly, the intermediate section of the cable may be arranged to deform in torsion as the outboard section pivots about the pivot axis. Nevertheless, the intermediate section may comprise two or more generally parallel strands that are arranged to bend along their length independently as the intermediate section deforms in torsion as a whole.

The connection may be joined to the subsea equipment unit by a pair of supports such as flanges that are mutually spaced along the pivot axis. In that case, the cable may curve away from the pivot axis between the supports of the pair and/or outboard of at least one of the supports of the pair.

The inventive concept embraces a subsea equipment unit comprising the connection of the invention, and further extends to a corresponding method of installing or retrieving a subsea equipment unit onto or from the seabed. That method comprises: causing an outboard section of a cable connected to the unit to pivot relative to the unit about a pivot axis, which axis is preferably substantially horizontal; and accommodating that pivotal movement by torsional deformation of an intermediate section of the cable that is guided to extend along or beside the pivot axis. The outboard section of the cable extends away from the pivot axis in a direction transverse to the pivot axis.

The outboard section of the cable may be held in a substantially vertical orientation, above the pivot axis, when lowering the unit toward the seabed during installation. Then, the outboard section of the cable may be pivoted into a substantially horizontal or below-horizontal orientation after landing the unit on the seabed. For example, the outboard section of the cable may be pivoted into that orientation by laying the cable on the seabed in a lay direction extending away from the unit.

On lifting the unit from the seabed, the outboard section of the cable may be allowed to drop into a substantially vertical orientation, below the pivot axis.

The outboard section of the cable may be locked against pivotal movement after installing the unit or may be unlocked to permit pivotal movement before retrieving the unit.

Efficiently, the unit can be installed when suspended from a vessel that also pays out the cable. The same vessel can be used to lay the cable after landing the unit on the seabed. Preliminarily, the cable can be coupled to the unit aboard the same vessel.

Thus, the invention adapts subsea structures for electrical equipment and associated installation methods to reduce installation time, ease retrieval and minimise complexity. Specifically, the invention improves arrangements for connecting a subsea power cable to subsea electrical equipment by adding a power cable pivot support on the equipment structure that offers flexibility in managing a cable connected to the equipment.

The invention enables installation without requiring the cable and the electrical equipment to be installed on the seabed in separate operations and then connected together. Thus, installation of subsea equipment together with its power supply cable can be done quickly with a single vessel in a single operation, in contrast to known alternatives that may require two or more vessels and/or more complex and time-consuming operations. Potentially, the invention also removes the need for wet-mate connectors.

The invention provides additional degrees of freedom for connection of a cable termination to subsea electrical equipment. More specifically, the invention provides a connection for a cable, the connection comprising a pivoting yoke that is pivotable relative to the structure about a pivot axis. The cable is coupled to the yoke and runs through or extends along or beside the pivot axis of the yoke in the direction of the pivot axis. The inventive concept extends to subsea electrical equipment comprising the pivoting connection of the invention without an intermediate subsea connector.

In summary, a pivoting cable connection of the invention comprises a tubular cable guide supported by a subsea equipment unit. The cable guide extends along and around a pivot axis. A cable extending through the connection comprises an intermediate section extending along or beside the pivot axis within the cable guide and an outboard section, pivotable about the pivot axis, that extends away from the pivot axis in a direction transverse to the pivot axis. When installing or retrieving the unit onto or from the seabed, pivotal movement of the outboard section of the cable relative to the unit is accommodated by torsional deformation of the intermediate section of the cable.

By allowing the cable to pivot above and below the pivot axis, the connection enables the unit to be lowered from a vessel that also pays out and lays the cable. Preliminarily, the cable can be coupled to the unit aboard the same vessel. Only one vessel is therefore needed.

To put the invention into the context of the prior art, reference has already been made to Figures 1 to 4b of the accompanying drawings, in which:
Figure 1 is a perspective view of a subsea transformer known in the prior art; and
Figures 2a to 4b are schematic side views that illustrate known techniques used to install subsea electrical equipment such as the transformer shown in Figure 1.

In order that the invention may be more readily understood, reference will now be made, by way of example, to the remainder of the drawings in which:
Figures 5a to 5c are a sequence of schematic side views that illustrate an installation method of the invention;
Figures 6a and 6b are a sequence of schematic side views that illustrate a retrieval method of the invention;
Figures 7a to 7c are perspective views of a first embodiment of the invention in installation, installed and retrieval states;
Figure 8 is a cut-away perspective view of the first embodiment in the installation state shown in Figures 7a;
Figures 9a to 9c are perspective views of a second embodiment of the invention in installation, installed and retrieval states; and
Figures 10 to 12 are schematic top plan views of further embodiments of the invention.

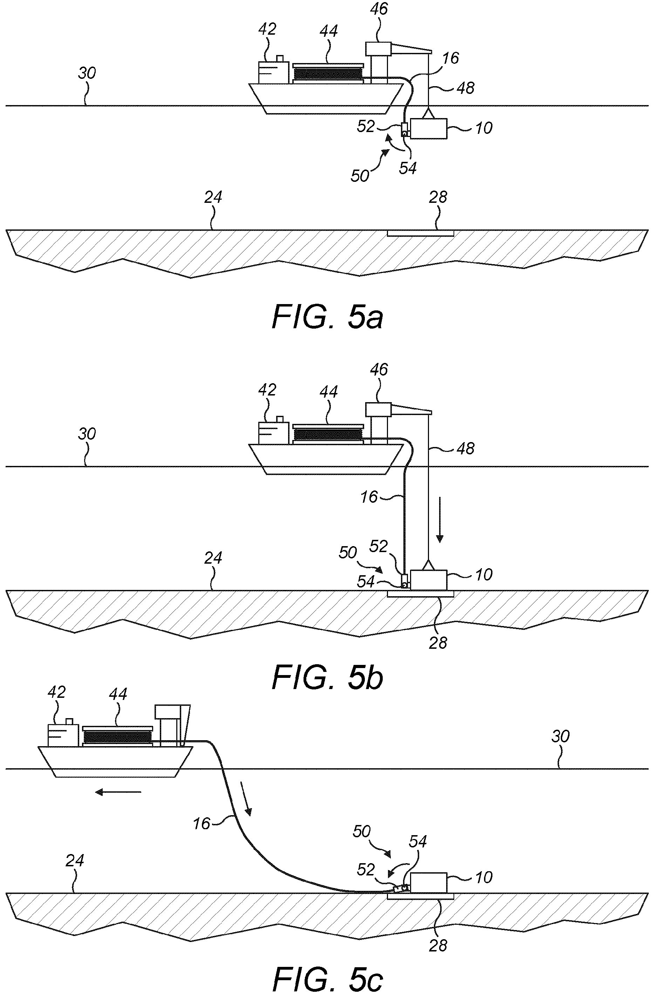

Referring next, then, to Figures 5a to 5c of the drawings, an installation vessel 42 is shown stationed at the surface 30 above a subsea foundation 28 on the seabed 24. The vessel 42 is capable of carrying an item of subsea equipment, again exemplified here as a transformer unit 10, to be connected to a length of cable 16 that is stored aboard the vessel 42. For this purpose, the vessel 42 has a cable store 44 such as a carousel, as shown, or a reel. The vessel 42 also has a crane 46 for lifting the unit 10 into the sea suspended from a lifting line 48, as shown in Figure 5a, after the cable 16 has been connected to the unit 10 aboard the vessel 42. The unit 10 remains in a substantially horizontal orientation throughout.

During installation, the cable 16 launched from the vessel 42 and the lifting line 48 extending from the crane 46 of the vessel 42 will remain in proximity. Consequently, on its path through the water column, the cable 16 adopts an upright orientation extending generally parallel to the lifting line 48 as shown in Figure 5a.

In accordance with the invention, the upright orientation of the cable 16 at its interface with the horizontal unit 10 is accommodated by a pivoting connection 50 between the cable 16 and the unit 10. For this purpose, the connection 50 comprises an outer part or yoke 52 that is fixed to an inner portion of the cable 16 adjoining the unit 10 and that is coupled to the unit 10 via a pivot 54. This defines a flexible connection between the cable 16 and the unit 10.

The pivot 54 defines a horizontal pivot axis about which the yoke 52 extending away from that axis can pivot relative to the unit 10. More generally, the pivot axis is transverse to, or substantially orthogonal to, the general path of the cable 16 extending between the unit 10 and the vessel 42.

During installation as shown in Figure 5a, the yoke 52 and the inner portion of the cable 16 lie in an installation state on a substantially vertical axis extending upwardly from the pivot 54, hence equivalent to a twelve o'clock (12:00) orientation about the pivot axis. The yoke 52 and the inner portion of the cable 16 retain that orientation until the unit 10 is landed on the foundation 28 as shown in Figure 5b.

Next, as shown in Figure 5c, the vessel 42 begins to travel across the surface 30 while launching more of the cable 16 to be laid on the seabed 24 along a lay path extending away from the unit 10. In consequence, the orientation of the yoke 52 and the inner portion of the cable 16 swings away from the vertical toward the horizontal, that being equivalent to a 9:00 orientation about the pivot axis.

Eventually, as in this example, the yoke 52 and the inner portion of the cable 16 can drop below the horizontal as shown in Figure 5c. This allows upward inclination of the cable 16 approaching the unit 10 to accommodate any elevation of the pivot 54 above the seabed 24 that surrounds the unit 10. For example, the yoke 52 can adopt an orientation equivalent to about 8:00 or 7:30 about the pivot axis, the latter being about 45° to the vertical. The yoke 52 is then in an installed state.

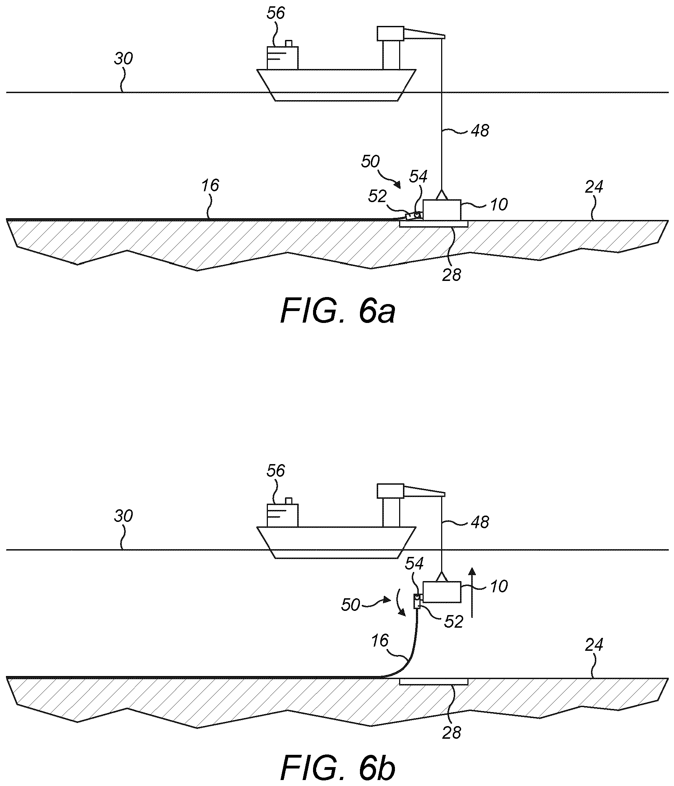

Turning next to Figures 6a and 6b, these drawings show a further benefit of the pivoting connection 50 when a unit 10 is being retrieved to the surface 30 for replacement, maintenance or decommissioning.

Figure 6a shows the unit 10 on the seabed 24 with the cable 16 extending away from the unit 10 across the seabed 24. The yoke 52 of the connection 50 retains the slight downward orientation from the final stage of installation as shown in Figure 5c. A lifting line 48 has been attached to the unit 10, ready to lift the unit 10 and the attached end portion of the cable 16 to a maintenance vessel 56 at the surface 30.

When the unit 10 is lifted away from the seabed 24 as shown in Figure 6b, the portion of cable 16 adjoining the unit 10 hangs with upright orientation beneath the pivot 54 of the connection 50. Consequently, the yoke 52 and the inner portion of the cable 16 are now in a retrieval state, oriented substantially vertically beneath the pivot 54 with an orientation equivalent to about 6:00 about the pivot axis.

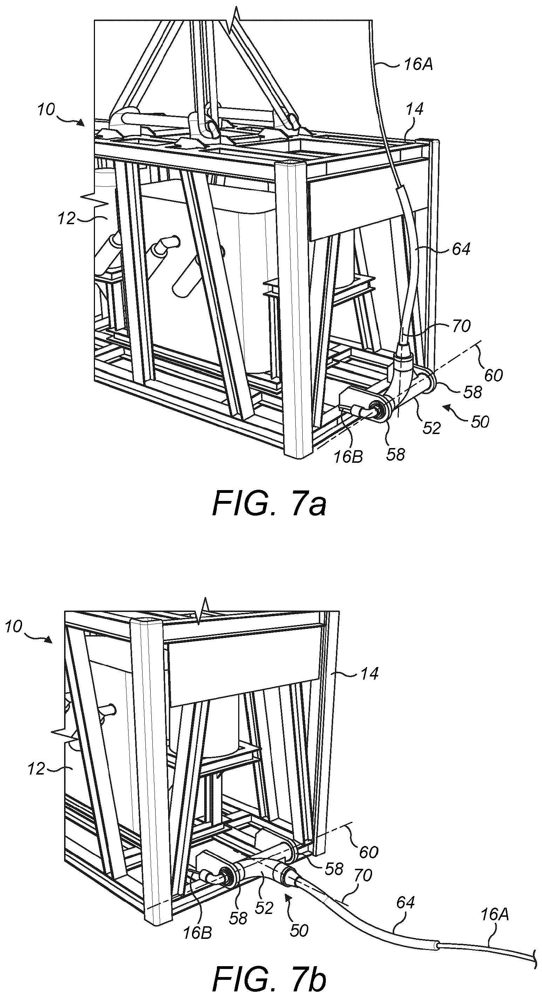

The pivoting connection 50 shown schematically in Figures 5a to 6b can be implemented or embodied in various ways in accordance with the invention. Examples of such variants will now be described with reference to Figures 7a to 12.

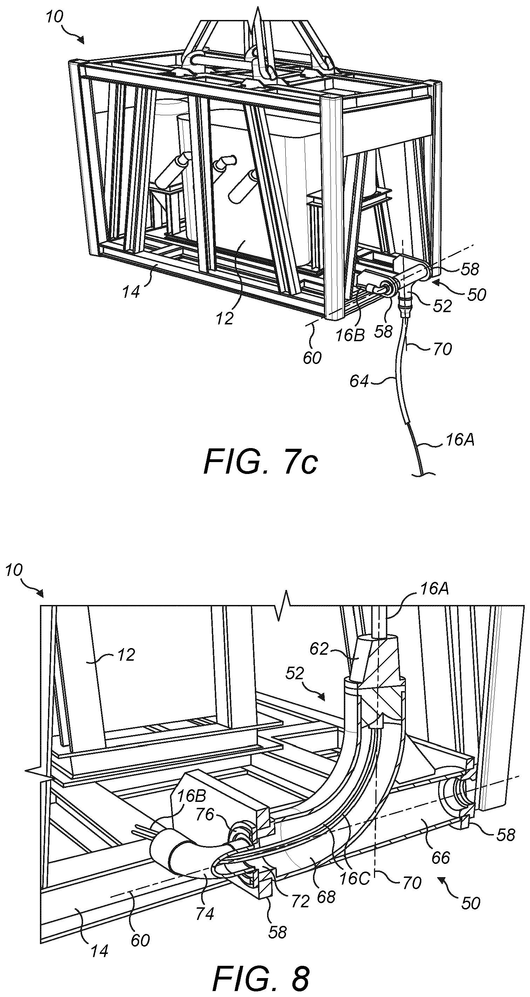

In a first embodiment of a subsea equipment unit 10 of the invention shown in Figures 7a to 7c and Figure 8, equipment such as a subsea transformer 12 is housed within a cuboidal lattice frame 14. An outrigger structure defined by mutually parallel upright supporting flanges 58 extends from an end of the frame 14 to support a pivoting connection 50. The pivoting connection 50 comprises a yoke 52 that can pivot with a cable 16 relative to the flanges 58 and the frame 14 about a substantially horizontal pivot axis 60.

Figures 7a, 7b and 8 show the unit 10 on the seabed. Figures 7a and 8 show the cable 16 and the yoke 52 extending upwardly in an installation state whereas Figure 7b show the cable 16 and the yoke 52 extending laterally in an installed state. Figure 7c shows the cable 16 and the yoke 52 extending downwardly in a retrieval state.

As best appreciated in Figure 8, the cable 16 extending within and through the yoke 52 is fixed to the yoke 52 by a cable termination 62 serving as an anchor formation and is thereby anchored to the unit 10 via the yoke 52. Figures 7a to 7c show that an outboard section 16A of the cable 16 extending outwardly from the yoke 52 is surrounded by a bend limiter 64. The outboard section 16A extends in a direction away from but aligned with the unit 10. Ultimately, though not shown, the outboard section 16A is connected to a remote power source that provides electrical power to the transformer 12 or to a remote power consumer that receives electrical power from the transformer 12. Conversely, an inboard section 16B of the cable 16, only part of which is shown, extends inwardly from the yoke 52 to the transformer 12.

The yoke 52 comprises a tubular crossmember 66 that extends between and connects the flanges 58. A central longitudinal axis of the crossmember 66 coincides with the pivot axis 60. The crossmember 66 is pivotably mounted to the flanges 58 to turn about the pivot axis 60.

The yoke 52 further comprises a pipe bend 68 that intersects the crossmember 66 between the flanges 58 and extends through a side wall of the crossmember 66. Thus, the pipe bend 68 turns with the crossmember 66 about the pivot axis 60 in response to the local inclination of the cable 16. The pipe bend 68 curves through substantially 90° of arc from an inner end centred on the pivot axis 60 to an outer end that is radially outboard of the crossmember 66 and is centred on an exit axis 70 orthogonal to the pivot axis 60. The pipe bend 68 serves as a guide for the cable 16 and the outer end of the pipe bend 68 holds the cable termination 62 that supports the cable 16. The crossmember 66 and the pipe bend 68 may be of common diameter as shown, for example being formed of pipe with a diameter of fourteen inches (35.5 cm).

The inner end of the pipe bend 68 faces or adjoins an inner side of one of the flanges 58. An aperture 72 penetrating that flange 58 is centred on the pivot axis 60. Via that aperture 72, the pipe bend 68 communicates with an inner end of a curved tubular protective duct 74 that is fixed to an outer side of the flange 58 and is also centred on the pivot axis 60. The flange 58 supports a swivel coupling 76 that accommodates movement of the crossmember 66 and the pipe bend 68 about the pivot axis 60 relative to the fixed duct 74.

Like the pipe bend 68, the duct 74 curves through substantially 90° of arc but in this instance lies fixed in a generally horizontal plane, terminating in an outer end that faces toward the transformer 12. The duct 74 may be of smaller diameter than the pipe bend 68, for example being formed of pipe with a diameter of six inches (15.2 cm).

Together, the pipe bend 68 and the duct 74 communicating end-to-end define a path for the cable 16 extending through the pivoting connection 50. A transverse central portion of the cable 16 extends along or beside the pivot axis 60. That transverse portion of the cable 16 accommodates pivotal movement of the pivoting connection 50 relative to the unit 10.

The cable 16 is not necessarily uniform along its length, especially where the cable 16 extends through the yoke 52. For example, the cable 16 may comprise a longitudinal series of different sections, including an intermediate section 16C between the outboard and inboard sections 16A, 16B that defines the transverse portion of the cable 16.

The intermediate section 16C of the cable 16 is configured to accommodate pivoting of the yoke 52 about the pivot axis 60. For example, the intermediate section 16C could comprise a single element or cross section that twists about its longitudinal axis to accommodate pivotal movement of the yoke 52. This solution is possible if there is an acceptably low risk of failure of the cable 16 due to radial separation of its longitudinal elements under torsion - known in the art as 'birdcaging'.

In this example, to reduce the possibility of birdcaging, the intermediate section 16C of the cable 16 comprises separate conductors grouped as strands or pigtails that extend generally parallel to each other along or beside the pivot axis 60 as shown in Figure 8. The pigtails of the intermediate section 16C can deflect independently of each other and therefore accommodate pivotal movement of the yoke 52 about the pivot axis 60 mainly by bending along their length, without plastic deformation, rather than by twisting about their respective axes. Nevertheless, whilst the pigtails bend along their length, the intermediate section 16C still deforms torsionally when considered as a whole. Optionally, the pigtails extend through the duct 74 into the inboard section 16B of the cable 16 as shown.

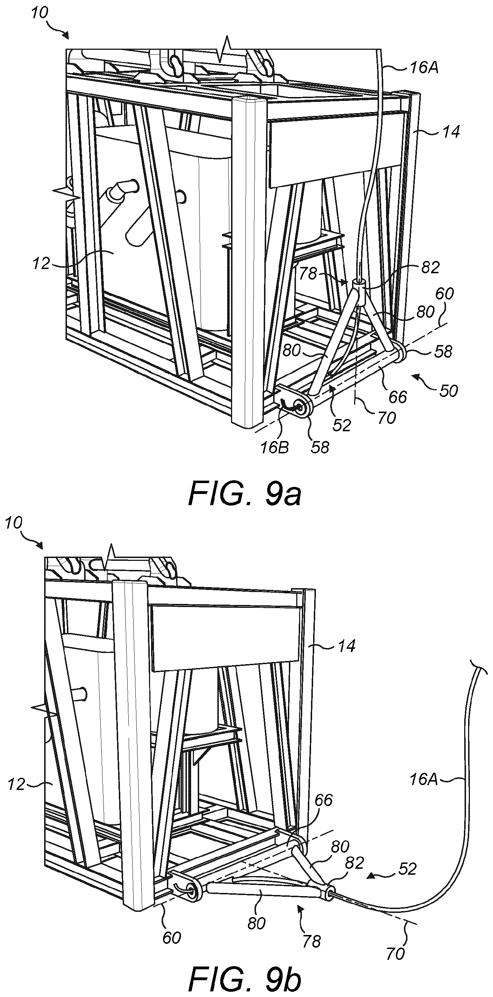

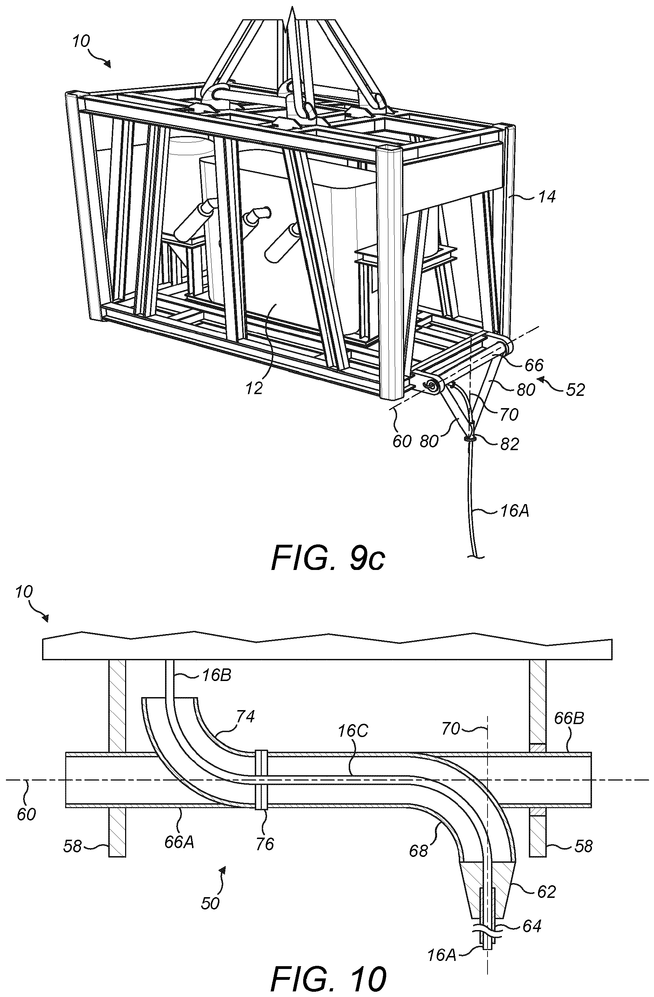

Moving on now to Figures 9a to 9c, these drawings show a second embodiment of the invention in which like numerals are used for like features. Again, a subsea equipment unit 10 comprises equipment such as a subsea transformer 12 housed within a frame 14. A pivoting connection 50 is supported by an outrigger structure that extends from an end of the frame 14. The outrigger structure comprises upright flanges 58 supporting a yoke 52 that can pivot relative to the flanges 58. The yoke 52 comprises a horizontal tubular crossmember 66 that extends between and is pivotably mounted to the flanges 58 to turn about a substantially horizontal pivot axis 60.

In contrast to the pipe bend 68 of the first embodiment, the yoke 52 further comprises a cable support structure 78 that, in this example, comprises a pair of arms 80 that converge outwardly from the crossmember 66 to support a tubular collar 82 through which the cable 16 runs. The collar 82 is radially outboard of the crossmember 66 and is axially aligned with an exit axis 70 orthogonal to the pivot axis 60, disposed centrally between the flanges 58. The cable 16 could be anchored to the collar 82, for example with a cable termination 62 like that of the first embodiment or could be anchored elsewhere.

Inboard of the collar 82, the cable 16 bends laterally away from the exit axis 70. The cable 16 then enters the crossmember 66 through a side wall of the crossmember 66 inboard of one of the flanges 58. The cable 16 then follows or extends beside the pivot axis 60 within the crossmember 66 and extends through that flange 58 until an inboard section 16A emerges from an end of the crossmember 66 outboard of the flange 58.

As in the first embodiment, a bend limiter 64 on the outboard section of the cable 16A and a duct 74 on the inboard section 16B of the cable 16 are optional and have been omitted in this example. Similarly, an intermediate section of the cable 16 extending along or beside the pivot axis 60 may comprise two or more pigtails like those shown in Figure 8. Alternatively, a cable 16 comprising a single element can be subjected to torsion about the pivot axis 60.

Many other variations are possible within the inventive concept. In this respect, reference is made finally to Figures 10 to 12 which show further embodiments to illustrate the breadth of the inventive concept. Again, like numerals are used for like parts.

In the pivoting connection 50 of Figure 10, the duct 74 and the swivel coupling 76 are inboard of the flanges 58 that support the crossmember 66. To enable this arrangement, the crossmember 66 comprises a fixed portion 66A that is fixed to one of the flanges 58 and movable portion 66B that can pivot within the other flange 58. The fixed and movable portions 66A, 66B of the crossmember 66 are joined by the swivel coupling 76. The duct 74 curves from the fixed portion 66A and the pipe bend 68 curves from the movable portion 66B of the crossmember 66.

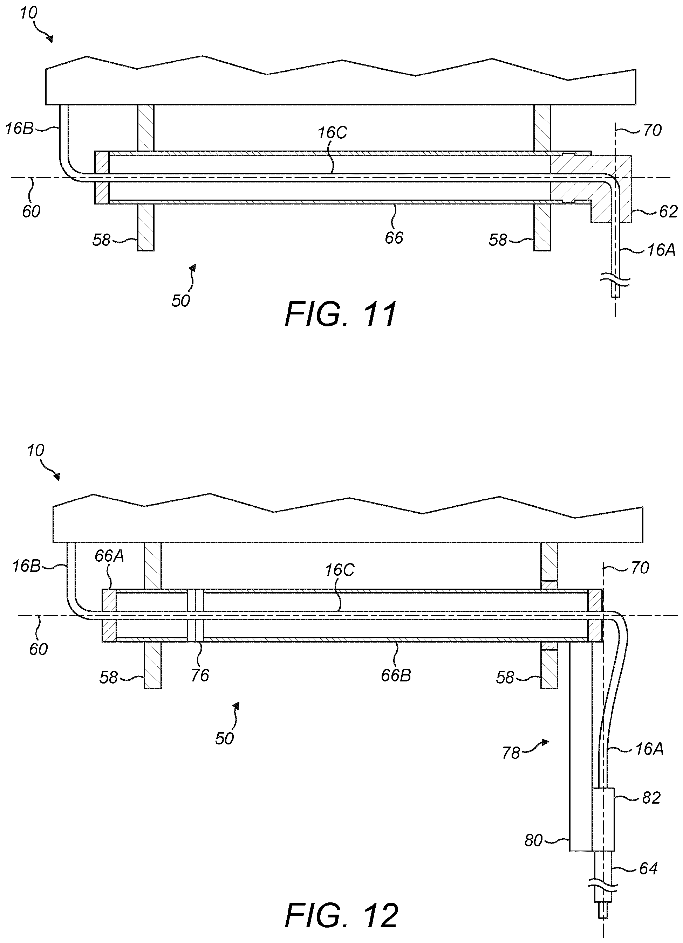

In the pivoting connection 50 of Figure 11, the crossmember 66 is fixed relative to the frame 14 and the cable 16 extends along and through the crossmember 66, along or beside the pivot axis 60. In this example, the cable 16 is anchored to the crossmember 66 via a cable termination 62 that can pivot relative to the crossmember 66 but could be anchored differently or elsewhere.

In the pivoting connection 50 of Figure 12, the crossmember 66 comprises a fixed portion 66A fixed to one of the flanges 58 and movable portion 66B that can pivot within the other flange 58. The fixed and movable portions 66A, 66B of the crossmember 66 are joined by the swivel coupling 76. In this example, the inboard section 16B of the cable 16 emerges from an outer end of the fixed portion 66A, outboard of the associated flange 58.

Similarly, the outboard section 16A of the cable 16 emerges from an outer end of the movable portion 66B, outboard of the associated flange 58. From there, the outboard section 16A of the cable 16 extends radially from the pivot axis 60 to a cable support structure 78, also outboard of the flange 58. In this example, the cable support structure 78 comprises an arm 80 fixed to the movable portion 66B of the crossmember 66. At its free end, the arm 80 supports a tubular collar 82 through which the outboard section 16A of the cable 16 runs. An optional bend limiter 64 extends from the collar 82 and surrounds the outboard section 16A.

In each of Figures 10 to 12, the intermediate portion 16C of the cable 16 extending along the crossmember 66 is shown as comprising a single torsional element but could instead comprise two or more pigtails like those shown in Figure 8.

Among other variations, a locking mechanism may be provided to lock the yoke 52 against angular movement relative to the unit 10 or to limit such downward movement of the yoke 52 about the pivot 54 when in the installed state. The locking mechanism may then be released before retrieval of the unit 10 to allow the yoke 52 and the cable 16 to hang below the pivot 54 during retrieval.

A yoke 52 or other hinged support for the cable 16 could be attached to pivot formations such as trunnions disposed externally or internally relative to upright flanges. In the former case, the cable can exit a crossmember of the support outside the flanges whereas in the latter case, the cable can exit a crossmember of the support between the flanges. It would also be possible to mount a pivoting yoke 52 or other hinged support to the unit 10 in other ways, for example by attaching a yoke 52 to pivot points on members of the frame 14 of the unit 10. Thus, flanges are not essential to the broad concept of the invention.

## Claims

1. A subsea equipment unit (10) comprising a pivoting cable connection (50), the connection (50) comprising:
a cable guide (68) supported by the unit (10) for pivoting movement about a pivot axis (60); and
a cable (16) extending on a cable path through the connection (50), wherein the cable (16) comprises an outboard section (16A), pivotable about the pivot axis (60), extending away from the pivot axis (60) in a direction transverse to the pivot axis (60);
**characterised in that** the cable guide (68) extends along and around the pivot axis (60) and **in that** the cable (16) further comprises an intermediate section (16C) at least partially within the cable guide (68), extending along or beside the pivot axis (60).

2. The subsea equipment unit (10) of Claim 1, wherein the cable guide (68) is tubular.

3. The subsea equipment unit (10) of Claim 1 or Claim 2, wherein the cable guide (68) forms part of a yoke (52) that is pivotable about the pivot axis (60) and that supports the outboard section (16A) of the cable (16) at a location offset laterally from the pivot axis (60).

4. The subsea equipment unit (10) of Claim 3, wherein the outboard section (16A) of the cable (16) is supported by at least one arm (80) extending from the cable guide (68).

5. The subsea equipment unit (10) of any preceding claim, wherein the intermediate section (16C) of the cable (16) is disposed between the outboard section (16A) of the cable (16) and an inboard section (16B) of the cable (16) that extends transversely relative to the pivot axis (60) away from the pivot axis (60) and toward equipment (12) of the unit (10).

6. The subsea equipment unit (10) of Claim 5, wherein: the inboard section (16B) of the cable (16) is received in a duct (74) that communicates with the cable guide (68); and a swivel acting between the duct (74) and the cable guide (68) permits pivotal movement of the cable guide (68) relative to the duct (74) about the pivot axis (60).

7. The subsea equipment unit (10) of any preceding claim, wherein the intermediate section (16C) of the cable (16) is arranged to deform in torsion as the outboard section (16A) pivots about the pivot axis (60).

8. The subsea equipment unit (10) of Claim 7, wherein the intermediate section (16C) comprises two or more generally parallel strands arranged to bend along their length independently as the intermediate section (16C) deforms in torsion as a whole.

9. A method of installing or retrieving a subsea equipment unit (10) onto or from the seabed (24), the unit having a cable (16) connected thereto, the cable (16) having an intermediate section (16C) that is guided to extend along or beside a pivot axis (60), and an outboard section (16A) that extends transverse to the pivot axis (60), the method comprising:
causing the outboard section (16A) of the cable (16) to pivot relative to the unit (10) about the pivot axis (60); and
accommodating said pivotal movement by torsional deformation of the intermediate section (16C) of the cable (16).

10. The method of Claim 9, comprising holding the outboard section (16A) of the cable (16) in a substantially vertical orientation, above the pivot axis (60), when lowering the unit (10) toward the seabed (24) during installation.

11. The method of Claim 10, comprising pivoting the outboard section (16A) of the cable (16) into a substantially horizontal or below-horizontal orientation after landing the unit (10) on the seabed (24).

12. The method of Claim 9, comprising allowing the outboard section (16A) of the cable (16) to drop into a substantially vertical orientation, below the pivot axis (60), on lifting the unit (10) from the seabed (24).

13. The method of any of Claims 9 to 12, comprising locking the outboard section (16A) of the cable (16) against said pivotal movement after installing the unit (10) or unlocking the outboard section (16A) of the cable (16) to permit said pivotal movement before retrieving the unit (10).

14. The method of any of Claims 9 to 13, comprising installing the unit (10) suspended from a vessel (42) that also pays out the cable (16).

15. The method of Claim 14, comprising using the same vessel (42) to lay the cable (16) after landing the unit (10) on the seabed (24).

## Patentansprüche

1. Unterwasserausrüstungseinheit (10), umfassend eine schwenkbare Kabelverbindung (50), die Verbindung (50) umfassend:
eine Kabelführung (68), die von der Einheit (10) für eine Schwenkbewegung um eine Schwenkachse (60) getragen wird; und
ein Kabel (16), das sich auf einem Kabelpfad durch die Verbindung (50) erstreckt, wobei das Kabel (16) einen äußeren Abschnitt (16A) umfasst, der um die Schwenkachse (60) schwenkbar ist und sich von der Schwenkachse (60) in einer Richtung quer zu der Schwenkachse (60) weg erstreckt;
**dadurch gekennzeichnet, dass** sich die Kabelführung (68) entlang und um die Schwenkachse (60) erstreckt und dass das Kabel (16) ferner einen Zwischenabschnitt (16C) umfasst, der sich zumindest teilweise innerhalb der Kabelführung (68) befindet und sich entlang oder neben der Schwenkachse (60) erstreckt.

2. Unterwasserausrüstungseinheit (10) nach Anspruch 1, wobei die Kabelführung (68) rohrförmig ist.

3. Unterwasserausrüstungseinheit (10) nach Anspruch 1 oder 2, wobei die Kabelführung (68) einen Teil eines Jochs (52) bildet, das um die Schwenkachse (60) schwenkbar ist und den äußeren Abschnitt (16A) des Kabels (16) an einer Position trägt, die seitlich von der Schwenkachse (60) versetzt ist.

4. Unterwasserausrüstungseinheit (10) nach Anspruch 3, wobei der äußere Abschnitt (16A) des Kabels (16) von mindestens einem Arm (80) getragen wird, der sich von der Kabelführung (68) erstreckt.

5. Unterwasserausrüstungseinheit (10) nach einem der vorstehenden Ansprüche, wobei der Zwischenabschnitt (16C) des Kabels (16) zwischen dem äußeren Abschnitt (16A) des Kabels (16) und einem inneren Abschnitt (16B) des Kabels (16) angeordnet ist, der sich quer zu der Schwenkachse (60) von der Schwenkachse (60) weg und zu einer Ausrüstung (12) der Einheit (10) hin erstreckt.

6. Unterwasserausrüstungseinheit (10) nach Anspruch 5, wobei: der innere Abschnitt (16B) des Kabels (16) in einem Kanal (74) aufgenommen ist, der mit der Kabelführung (68) in Kommunikation steht; und ein zwischen dem Kanal (74) und der Kabelführung (68) wirkendes Drehgelenk eine Schwenkbewegung der Kabelführung (68) relativ zu dem Kanal (74) um die Schwenkachse (60) ermöglicht.

7. Unterwasserausrüstungseinheit (10) nach einem der vorstehenden Ansprüche, wobei der Zwischenabschnitt (16C) des Kabels (16) angeordnet ist, um sich durch Torsion zu verformen, wenn der äußere Abschnitt (16A) um die Schwenkachse (60) schwenkt.

8. Unterwasserausrüstungseinheit (10) nach Anspruch 7, wobei der Zwischenabschnitt (16C) zwei oder mehr im Allgemeinen parallele Stränge umfasst, die angeordnet sind, um sich entlang ihrer Länge unabhängig voneinander zu biegen, wenn sich der Zwischenabschnitt (16C) als Ganzes durch Torsion verformt.

9. Verfahren zum Installieren oder Zurückholen einer Unterwasserausrüstungseinheit (10) auf dem oder von dem Meeresboden (24), wobei die Einheit mit einem Kabel (16) verbunden ist, wobei das Kabel (16) einen Zwischenabschnitt (16C), der geführt wird, um sich entlang oder neben einer Schwenkachse (60) zu erstrecken, und einen äußeren Abschnitt (16A), der sich quer zu der Schwenkachse (60) erstreckt, aufweist, das Verfahren umfassend:
Veranlassen des äußeren Abschnitts (16A) des Kabels (16), sich relativ zu der Einheit (10) um die Schwenkachse (60) zu schwenken; und
Aufnehmen der Schwenkbewegung durch Torsionsverformung des Zwischenabschnitts (16C) des Kabels (16).

10. Verfahren nach Anspruch 9, umfassend das Halten des äußeren Abschnitts (16A) des Kabels (16) in einer im Wesentlichen vertikalen Ausrichtung oberhalb der Schwenkachse (60), wenn die Einheit (10) während der Installation in Richtung des Meeresbodens (24) abgesenkt wird.

11. Verfahren nach Anspruch 10, umfassend das Schwenken des äußeren Abschnitts (16A) des Kabels (16) in eine im Wesentlichen horizontale oder unterhalb der Horizontalen liegende Ausrichtung, nachdem die Einheit (10) auf dem Meeresboden (24) abgesetzt wurde.

12. Verfahren nach Anspruch 9, umfassend das Zulassen, dass der äußere Abschnitt (16A) des Kabels (16) beim Anheben der Einheit (10) von dem Meeresboden (24) in eine im Wesentlichen vertikale Ausrichtung unterhalb der Schwenkachse (60) absinkt.

13. Verfahren nach einem der Ansprüche 9 bis 12, umfassend das Verriegeln des äußeren Abschnitts (16A) des Kabels (16) gegen die Schwenkbewegung nach dem Installieren der Einheit (10) oder das Entriegeln des äußeren Abschnitts (16A) des Kabels (16), um die Schwenkbewegung vor dem Zurückholen der Einheit (10) zu ermöglichen.

14. Verfahren nach einem der Ansprüche 9 bis 13, umfassend das Installieren der Einheit (10), während diese an einem Schiff (42) aufgehängt ist, das auch das Kabel (16) abrollt.

15. Verfahren nach Anspruch 14, umfassend das Verwenden desselben Schiffs (42) zum Verlegen des Kabels (16), nachdem die Einheit (10) auf dem Meeresboden (24) abgesetzt wurde.

## Revendications

1. Unité d'équipement sous-marin (10) comprenant un raccord de câble pivotant (50), le raccord (50) comprenant :
un guide de câble (68) supporté par l'unité (10) pour un mouvement de pivotement autour d'un axe de pivotement (60) ; et
un câble (16) s'étendant sur un chemin de câble à travers le raccord (50), dans laquelle le câble (16) comprend une section extérieure (16A), pouvant pivoter autour de l'axe de pivotement (60), s'étendant à l'écart de l'axe de pivotement (60) dans une direction transversale à l'axe de pivotement (60) ;
**caractérisée en ce que** le guide de câble (68) s'étend le long et autour de l'axe de pivotement (60) et **en ce que** le câble (16) comprend en outre une section intermédiaire (16C) au moins partiellement à l'intérieur du guide de câble (68), s'étendant le long ou à côté de l'axe de pivotement (60).

2. Unité d'équipement sous-marin (10) selon la revendication 1, dans laquelle le guide de câble (68) est tubulaire.

3. Unité d'équipement sous-marin (10) selon la revendication 1 ou la revendication 2, dans laquelle le guide de câble (68) fait partie d'un étrier (52) qui peut pivoter autour de l'axe de pivotement (60) et qui supporte la section extérieure (16A) du câble (16) à un emplacement décalé latéralement par rapport à l'axe de pivotement (60).

4. Unité d'équipement sous-marin (10) selon la revendication 3, dans laquelle la section extérieure (16A) du câble (16) est supportée par au moins un bras (80) s'étendant depuis le guide de câble (68).

5. Unité d'équipement sous-marin (10) selon l'une quelconque revendication précédente, dans laquelle la section intermédiaire (16C) du câble (16) est disposée entre la section extérieure (16A) du câble (16) et une section intérieure (16B) du câble (16) qui s'étend transversalement par rapport à l'axe de pivotement (60) en s'éloignant de l'axe de pivotement (60) et vers un équipement (12) de l'unité (10).

6. Unité d'équipement sous-marin (10) selon la revendication 5, dans laquelle : la section intérieure (16B) du câble (16) est reçue dans un conduit (74) qui communique avec le guide de câble (68) ; et un joint tournant agissant entre le conduit (74) et le guide de câble (68) permet un mouvement de pivotement du guide de câble (68) par rapport au conduit (74) autour de l'axe de pivotement (60).

7. Unité d'équipement sous-marin (10) selon l'une quelconque revendication précédente, dans laquelle la section intermédiaire (16C) du câble (16) est agencée pour se déformer en torsion lorsque la section extérieure (16A) pivote autour de l'axe de pivotement (60).

8. Unité d'équipement sous-marin (10) selon la revendication 7, dans laquelle la section intermédiaire (16C) comprend deux brins généralement parallèles ou plus agencés pour fléchir indépendamment le long de leur longueur lorsque la section intermédiaire (16C) se déforme en torsion dans son ensemble.

9. Procédé d'installation ou de récupération d'une unité d'équipement sous-marin (10) sur ou depuis le fond marin (24), l'unité ayant un câble (16) relié à celle-ci, le câble (16) ayant une section intermédiaire (16C) qui est guidée pour s'étendre le long ou à côté d'un axe de pivotement (60), et une section extérieure (16A) qui s'étend transversalement à l'axe de pivotement (60), le procédé comprenant :
le fait d'amener la section extérieure (16A) du câble (16) à pivoter par rapport à l'unité (10) autour de l'axe de pivotement (60) ; et
la compensation dudit mouvement de pivotement par déformation en torsion de la section intermédiaire (16C) du câble (16).

10. Procédé selon la revendication 9, comprenant le maintien de la section extérieure (16A) du câble (16) dans une orientation sensiblement verticale, au-dessus de l'axe de pivotement (60), lors de la descente de l'unité (10) vers le fond marin (24) pendant l'installation.

11. Procédé selon la revendication 10, comprenant le pivotement de la section extérieure (16A) du câble (16) dans une orientation sensiblement horizontale ou en dessous de l'horizontale après la pose de l'unité (10) sur le fond marin (24).

12. Procédé selon la revendication 9, comprenant le fait de laisser la section extérieure (16A) du câble (16) tomber dans une orientation sensiblement verticale, en dessous de l'axe de pivotement (60), lors du levage de l'unité (10) depuis le fond marin (24).

13. Procédé selon l'une quelconque des revendications 9 à 12, comprenant le verrouillage de la section extérieure (16A) du câble (16) contre ledit mouvement de pivotement après l'installation de l'unité (10) ou le déverrouillage de la section extérieure (16A) du câble (16) pour permettre ledit mouvement de pivotement avant la récupération de l'unité (10).

14. Procédé selon l'une quelconque des revendications 9 à 13, comprenant l'installation de l'unité (10) suspendue à un navire (42) qui déroule également le câble (16).

15. Procédé selon la revendication 14, comprenant l'utilisation du même navire (42) pour poser le câble (16) après la pose de l'unité (10) sur le fond marin (24).
